# EUROPÄISCHE PATENTANMELDUNG

(11) **EP 2 189 680 A2**
(43) Veröffentlichungstag der Anmeldung: **26.05.2010**
(21) Anmeldenummer: 09168088.4
(22) Anmeldetag: 18.08.2009
(51) Int. Cl.: F16H 1/32

(54) **Getriebeanordnung**

(30) Priorität: 19.11.2008 DE 102008037565
(71) Anmelder: SSB Duradrive GmbH, 48499 Salzbergen (DE)
(72) Erfinder: Thormann, Andreas, 48157 Münster (DE); Kattenbeck, Christoph, 48282 Emsdetten (DE); Ahlers, Ludger, 48480 Lünne (DE)
(74) Vertreter: Bossmeyer, Jörg Peter

(57) **Zusammenfassung**

Getriebeanordnung mit einem Getriebegehäuse (13), einer um eine Wellenachse (19) drehbaren Antriebswelle (11), wenigstens zwei Kurvenscheiben (29, 30), wenigstens zwei mit der Antriebswelle (11) gekoppelten Exzentern (27, 28), die jeweils um die Wellenachse (19) oder um eine dazu parallele Achse drehbar in einer der Kurvenscheiben (29, 30) gelagert sind, einem oder mehreren Mitnehmern (31), mittels welchen die Kurvenscheiben (29, 30) an dem Getriebegehäuse (13) geführt sind, und einem um die Wellenachse (19) drehbaren Zahnkranz (12), der mit den Kurvenscheiben (29, 30) in Eingriff steht, wobei der Zahnkranz (12) die Kurvenscheiben (29, 30) umringt und in Richtung der Wellenachse (19) zwischen zwei miteinander verbundenen Teilen (15, 16) des Getriebegehäuses (13) angeordnet ist, an denen der Zahnkranz (12) um die Wellenachse (19) drehbar gelagert ist.

## Beschreibung

Die Erfindung betrifft eine Getriebeanordnung mit einem Getriebegehäuse, einer um eine wellenachse drehbaren Antriebswelle, wenigstens zwei Kurvenscheiben, wenigstens zwei mit der Antriebswelle gekoppelten Exzentern, die jeweils um die Wellenachse oder um eine dazu parallele Achse drehbar in einer der Kurvenscheiben gelagert sind, einem oder mehreren Mitnehmern, mittels welchen die Kurvenscheiben an dem Getriebegehäuse geführt sind, und einem um die Wellenachse drehbaren Zahnkranz, der mit den Kurvenscheiben in Eingriff steht.

Aus der US 4 407 170 A ist ein Zykloidengetriebe mit von einer Antriebswelle angetriebenen Planetenrädern bekannt, die in Kurvenscheiben angeordnete Exzenter drehen. Die durch die Exzenter angetriebenen Kurvenscheiben stehen mit der Innenverzahnung einer topfförmigen Abtriebswelle im Eingriff, auf der ein Zahnrad festgeschraubt ist. Die Antriebswelle wird von einem Hydraulikmotor angetrieben, wobei die von dem Motor in die Welle eingeprägte Drehzahl mittels des Getriebes reduziert wird. Der Motor ist an einem Deckel befestigt, der die topfförmige Abtriebswelle verschließt, die drehbar an dem Deckel gelagert ist.

Nachteilig an dieser Anordnung ist die aufgrund ihrer Geometrie eingeschränkte Einsetzbarkeit. Beispielsweise ist die Getriebeseite vorgegeben, an welcher der Antriebsmotor anzubringen ist. Ferner kann das Getriebe nur am Deckel oder Motor und somit auch nur einseitig an einer Halterung festgelegt werden.

Ausgehend hiervon liegt der Erfindung die Aufgabe zugrunde, eine Getriebeanordnung der eingangs genannten Art derart weiterzubilden, dass sie flexibler einsetzbar ist, insbesondere hinsichtlich ihrer Festlegung an einer Halterung und/oder hinsichtlich der Anbringbarkeit eines Antriebsmotors.

Diese Aufgabe wird erfindungsgemäß mit einer Getriebeanordnung nach Anspruch 1 gelöst. Bevorzugte Weiterbildungen der Erfindung sind in den Unteransprüchen gegeben.

Die erfindungsgemäße Getriebeanordnung weist ein Getriebegehäuse, eine um eine Wellenachse drehbare Antriebswelle, wenigstens zwei Kurvenscheiben, wenigstens zwei mit der Antriebswelle gekoppelte Exzenter, die jeweils um die Wellenachse oder um eine dazu parallele Achse drehbar in einer der Kurvenscheiben gelagert sind, einen oder mehrere Mitnehmer, mittels welchen die Kurvenscheiben an dem Getriebegehäuse geführt sind, und einen um die Wellenachse drehbaren Zahnkranz auf, der mit den Kurvenscheiben in Eingriff steht, wobei der Zahnkranz die Kurvenscheiben umringt und in Richtung der Wellenachse zwischen zwei miteinander verbundenen Teilen des Getriebegehäuses angeordnet ist, an denen der Zahnkranz um die Wellenachse drehbar gelagert ist.

Durch die erfindungsgemäße Anordnung des die Kurvenscheiben umringenden Zahnkranzes zwischen den beiden Teilen des Getriebegehäuses, die auch als Getriebegehäuseteile bezeichnet werden, wird ein annähernd symmetrischer Aufbau der Getriebeanordnung erzielt. Die insbesondere fest miteinander verbundenen Getriebegehäuseteile ermöglichen, dass die erfindungsgemäße Getriebeanordnung mit jedem der Getriebegehäuseteile an einer Halterung oder dergleichen festgelegt werden kann. Ferner kann an jedem der Getriebegehäuseteile ein Antriebsmotor zum Antreiben der Antriebswelle angeschlossen werden, da keiner der Getriebegehäuseteile mit dem Zahnkranz rotiert. Die erfindungsgemäße Getriebeanordnung bietet somit hinsichtlich ihrer Einsetzbarkeit eine deutlich größere Flexibilität als das herkömmliche Zykloidengetriebe gemäß der US 4 407 170 A. Der Zahnkranz ist insbesondere an jedem der Getriebegehäuseteile um die Wellenachse drehbar gelagert. Ferner sitzt in jeder der Kurvenscheiben bevorzugt einer der Exzenter.

Bevorzugt ist die Antriebswelle über jedes der Getriebegehäuseteile von außen, d.h. von außerhalb des Getriebegehäuses, zugänglich. Vorzugsweise durchgreift die Antriebswelle eines oder beide der Getriebegehäuseteile. Insbesondere ist die Antriebswelle an den Getriebegehäuseteilen, bevorzugt an jedem der Getriebegehäuseteile, um die Wellenachse drehbar gelagert. Hierdurch wird die Symmetrie der Anordnung weiter erhöht.

Der oder die Mitnehmer durchgreifen insbesondere in den Kurvenscheiben vorgesehene Löcher, die vorzugsweise kreisförmig ausgebildet sind. Dabei ist der Durchmesser der Löcher insbesondere größer als der Außendurchmesser der Mitnehmer, die vorzugsweise zylinderförmig ausgebildet sind. Ferner können der oder die Mitnehmer jeweils eine auf einem Bolzen gelagerte Hülse aufweisen, die insbesondere um den Bolzen drehbar ist. Hierdurch kann die Reibung zwischen dem oder den Mitnehmern und den Kurvenscheiben verringert werden. Bevorzugt sind die Mitnehmer in einem oder in jedem der Getriebegehäuse gelagert. Insbesondere sind Mitnehmer an dem Getriebegehäuse befestigt. Die Mitnehmer beschränken oder verhindern bevorzugt eine Eigenrotation der Kurvenscheiben.

In Richtung der Wellenachse (axiale Richtung) ist zwischen den beiden Gehäusehälften im Bereich der Kurvenscheiben bevorzugt eine Öffnung für den Zahnkranz vorgesehen, sodass der Zahnkranz von außen zugänglich ist. Bevorzugt ragt der Zahnkranz oder ein Teil des Zahnkranzes in einer zur Wellenachse radialen Richtung durch die Öffnung hindurch aus dem Getriebegehäuse heraus. Der Zahnkranz ist vorzugsweise zu einer senkrecht zur Wellenachse verlaufenden Ebene spiegelsymmetrisch oder zumindest im Wesentlichen spiegelsymmetrisch aufgebaut, sodass die Symmetrie der Getriebeanordnung weiter erhöht wird.

Jede der Kurvenscheiben weist an ihrem Außenumfang bevorzugt eine Eingriffskontur auf, die mit einer am Innenumfang des Zahnkranzes vorgesehen Eingriffskontur in Eingriff steht oder gebracht werden kann. Als Eingriffskontur weist jede der Kurvenscheiben z.B. eine Außenverzahnung, eine Wellenkontur oder einen Bolzenring auf. Bevorzugt sind die Eingriffskonturen der Kurvenscheiben identisch. Insbesondere weisen die Eingriffskonturen der Kurvenscheiben die gleiche Anzahl an Zähnen, Erhebungen oder Bolzen auf. Vorzugsweise sind die Kurvenscheiben identisch oder im Wesentlichen identisch ausgebildet.

Die Eingriffskontur am Innenumfang des Zahnkranzes kann als Innenverzahnung oder als Wellenkontur ausgebildet sein. Gemäß einer Weiterbildung der Erfindung wird diese Eingriffskontur aber durch am Innenumfang des Zahnkranzes gelagerte Bolzen gebildet, die insbesondere rings der Wellenachse angeordnet sind. Die Bolzen stehen mit den Eingriffskonturen der Kurvenscheiben in Eingriff oder können mit diesen Eingriffskonturen in Eingriff gebracht werden. Bevorzugt sind die Bolzen drehbar am Innenumfang des Zahnkranzes gelagert, sodass die Reibung zwischen den Kurvenscheiben und dem Zahnkranz reduziert ist.

Der Innendurchmesser der Eingriffskontur des Zahnkranzes ist bevorzugt größer als der Außendurchmesser von jeder der Eingriffskonturen der Kurvenscheiben. Ferner unterscheidet sich die Eingriffskontur des Zahnkranzes vorzugsweise von jeder der Eingriffskonturen der Kurvenscheiben in der Anzahl der Erhebungen, Zähne oder Bolzen. Bevorzugt ist die Anzahl der Erhebungen, Zähne oder Bolzen der Eingriffskontur des Zahnkranzes größer als die Anzahl der Erhebungen, Zähne oder Bolzen von jeder der Eingriffskonturen der Kurvenscheiben, insbesondere um eins oder um zwei.

Jeder der Exzenter sitzt insbesondere in einer in der jeweiligen Kurvenscheibe vorgesehenen Ausnehmung und steht bevorzugt an seinem Außenumfang mit dem diese Ausnehmung begrenzenden Rand der Kurvenscheibe in Kontakt. Die Ausnehmungen in den Kurvenscheiben sind insbesondere kreisförmig. Ferner sind die Ausnehmungen bevorzugt konzentrisch zu der jeweiligen Kurvenscheibe. Gemäß einer Weiterbildung der Erfindung sind am Außenumfang jedes Exzenters Rollen drehbar gelagert, sodass die Reibung zwischen den Exzentern und den Kurvenscheiben gering gehalten werden kann. Die Exzenter sind insbesondere zylinderförmig ausgebildet.

Das Getriebegehäuse, die Kurvenscheiben, die Exzenter, der oder die Mitnehmer sowie der Zahnkranz bilden insbesondere ein Getriebe, welches bevorzugt ein Zykloidengetriebe ist oder auf diesem basiert. Vorzugsweise wird auch die Antriebswelle dem Getriebe zugerechnet.

Die Kurvenscheiben, die Exzenter, der oder die Mitnehmer und der Zahnkranz sind insbesondere in dem Getriebegehäuse angeordnet. Ferner verläuft die Antriebswelle vorzugsweise in dem Getriebegehäuse. Dabei erstreckt sich der Zahnkranz vorzugsweise aus dem Getriebegehäuse heraus. Ferner erstreckt sich vorzugsweise die Antriebswelle einseitig oder beidseitig aus dem Getriebegehäuse heraus. Die Getriebegehäuseteile begrenzen insbesondere einen Gehäuseinnenraum, in dem die Kurvenscheiben, die Exzenter, der oder die Mitnehmer und der Zahnkranz angeordnet sind. Ferner verläuft die Antriebswelle bevorzugt in dem oder durch den Gehäuseinnenraum. Vorzugsweise sind die Getriebegehäuseteile identisch oder im Wesentlichen identisch ausgebildet, sodass die Symmetrie der Getriebeanordnung weiter erhöht wird.

Gemäß einer Ausgestaltung der Erfindung ist ein Antriebsmotor mit einer Motorwelle vorgesehen, mittels welcher die Antriebswelle und/oder die Getriebeanordnung angetrieben werden kann. Dabei bildet die Motorwelle insbesondere die Antriebswelle der erfindungsgemäßen Getriebeanordnung. Der Antriebsmotor weist vorzugsweise ein Motorgehäuse auf. Insbesondere ist der Antriebsmotor und/oder dessen Motorgehäuse an einem der Getriebegehäuseteile befestigt. Bevorzugt bildet eines der Getriebegehäuseteile das oder einen Teil des Motorgehäuses. Hierdurch wird eine integrierte Ausbildung des Getriebes und/oder der Getriebeanordnung mit dem Antriebsmotor erzielt.

Ist die von dem Antriebsmotor abgebbare Leistung zu gering, und kann der Antriebsmotor z.B. aus Gründen des zur Verfügung stehenden Bauraums nicht vergrößert werden, so ist es möglich, einen zweiten Antriebsmotor vorzusehen, der mit der Getriebeanordnung gekoppelt ist. Somit kann die Getriebeanordnung von beiden Motoren angetrieben werden. Gemäß einer Ausgestaltung der Erfindung sind somit zwei Antriebsmotoren vorgesehen, die jeweils eine oder eine gemeinsame Motorwelle aufweisen, die mit der Antriebswelle und/oder mit der Getriebeanordnung gekoppelt ist. Bevorzugt bilden die gemeinsame Motorwelle und die Antriebswelle eine Einheit und/oder eine gemeinsame Welle, die um die Wellenachse drehbar ist. Insbesondere verläuft die gemeinsame Welle in Richtung der Wellenachse in den Motoren sowie durch das Getriebe und/oder den Zahnkranz und/oder die Kurvenscheiben hindurch. Bevorzugt ist das Getriebe und/oder sind der Zahnkranz und die Kurvenscheiben in Richtung der Wellenachse zwischen den Antriebsmotoren angeordnet, sodass die Symmetrie der erfindungsgemäßen Getriebeanordnung weiter erhöht wird. Die Antriebsmotoren weisen vorzugsweise jeweils ein Motorgehäuse auf. Insbesondere ist jeder der Antriebsmotoren und/oder jedes der Motorgehäuse an einem der Getriebegehäuseteile befestigt. Gemäß einer Ausgestaltung der Erfindung bildet jedes der Getriebegehäuseteile eines der oder einen Teil der jeweiligen Motorgehäuse. Hierdurch wird eine integrierte Ausbildung des Getriebes und/oder der Getriebeanordnung mit den Antriebsmotoren erzielt, wobei gleichzeitig eine hohe Symmetrie der Gesamtanordnung erreicht wird.

Der oder die Antriebsmotoren sind bevorzugt jeweils als Elektromotor, insbesondere als elektrischer Servomotor ausgebildet. Somit ist eine elektronische Ansteuerung des oder der Antriebsmotoren möglich. Dazu sind der oder die Antriebsmotoren vorzugsweise mit einer elektronischen Steuereinrichtung gekoppelt. Sofern die Getriebeanordnung einen oder mehrere Antriebsmotoren umfasst, kann die Getriebeanordnung auch als Antrieb oder Antriebsanordnung bezeichnet werden.

Die erfindungsgemäße Getriebeanordnung dient insbesondere zum Antreiben eines Zahnrads, welches mit dem Zahnkranz kämmt und vorzugsweise an einer Halterung drehbar gelagert ist. Gemäß einer Ausgestaltung der Erfindung ist somit ein mit dem Zahnkranz kämmendes Zahnrad vorgesehen, welches drehbar an einer Halterung gelagert ist, relativ zu welcher das Getriebegehäuse starr festgelegt ist. Insbesondere ist das Getriebegehäuse an der Halterung befestigt. Das Zahnrad und die Halterung sind insbesondere Teil einer mittels der Getriebeanordnung anzutreibenden Vorrichtung. Vorzugsweise handelt es sich bei dieser Vorrichtung um eine Schwenkvorrichtung, sodass wenigstens ein an der Halterung schwenkbar gelagerter Schwenkarm vorgesehen ist, der insbesondere drehfest mit dem Zahnrad gekoppelt ist. Diese drehfeste Koppelung zwischen dem Zahnrad und dem Schwenkarm kann dabei direkt oder unter Zwischenschaltung eines zusätzlichen Getriebes erfolgen.

Die Erfindung betrifft ferner eine Vorrichtung mit einer Halterung, wenigstens einem an der Halterung drehbar gelagerten Zahnrad oder einer an der Halterung gelagerten Zahnstange, und einer Getriebeanordnung, die an der Halterung befestigt ist. Die Getriebeanordnung ist insbesondere eine erfindungsgemäße Getriebeanordnung und kann gemäß allen in diesem Zusammenhang beschriebenen Ausgestaltungen weitergebildet sein. Insbesondere kämmt der Zahnkranz der Getriebeanordnung mit dem Zahnrad oder der Zahnstange, die vorzugsweise verschiebbar an der Halterung gelagert ist. Bevorzugt ist die Getriebeanordnung mittels ihres Getriebegehäuses an der Halterung befestigt.

Die Vorrichtung kann ein das Zahnrad aufweisendes Getriebe und/oder eine Welle umfassen, auf der das Zahnrad aufgesetzt ist. Bevorzugt handelt es sich bei der Vorrichtung um eine Schwenkvorrichtung mit wenigstens einem an der Halterung schwenkbar gelagerten und mit dem Zahnrad gekoppelten Schwenkarm. Das Zahnrad ist vorzugsweise drehfest mit dem wenigstens einen Schwenkarm gekoppelt.

Gemäß einer Ausgestaltung der Schwenkvorrichtung ist ein zweiter Schwenkarm an der Halterung schwenkbar gelagert und mit dem Zahnrad gekoppelt, welches zwischen den beiden Schwenkarmen angeordnet ist. Insbesondere fallen die Schwenkachsen, um welche die Schwenkarme schwenkbar sind, zusammen. Bevorzugt fällt auch die Drehachse, um welche das Zahnrad drehbar ist, mit den Schwenkachsen zusammen.

Die Erfindung betrifft ferner die Verwendung der Getriebeanordnung zum Antreiben der Vorrichtung, insbesondere Schwenkvorrichtung.

Herkömmliche Schwenkvorrichtungen sind z.B. mit einer pneumatischen Steuerung versehen, die aufgrund ihrer Trägheit lediglich eingeschränkt zu Steuerungs- und Regelungszwecken geeignet ist. Dagegen ist es mittels der erfindungsgemäßen Getriebeanordnung möglich, den oder die Antriebsmotoren mittels einer elektrischen Steuereinrichtung zu steuern und/oder zu regeln. Vorzugsweise ist die Steuereinrichtung programmierbar, sodass "Fahrkurven" für die Antriebsmotoren und somit für die Schwenkvorrichtung auf einfache Weise vorgegeben werden können. Die Steuereinrichtung umfasst hierzu insbesondere einen Digitalrechner oder Mikrokontroller. Die Erfindung bietet somit die Möglichkeit, den oder die Antriebsmotoren besser zu regeln und/oder zu steuern als beim Einsatz einer herkömmlichen, pneumatischen Steuerung.

Ferner ermöglicht die Erfindung durch den Einsatz von zwei Antriebsmotoren die Abgabe einer großen Leistung bei gleichzeitig geringem Bauraum. Dabei sind die Antriebsmotoren bevorzugt durch eine durchgehende Welle miteinander verbunden und werden insbesondere synchron angesteuert. Zwischen den beiden Antriebsmotoren ist bevorzugt das Getriebe implementiert.

Das Getriebe der erfindungsgemäßen Getriebeanordnung basiert insbesondere auf einem Zykloidengetriebe und ist innerhalb oder im Wesentlichen innerhalb des Zahnkranzes untergebracht, der vorzugsweise als Direktantrieb für die Schwenkvorrichtung oder den wenigstens einen Schwenkarm genutzt wird.

Die Erfindung wird nachfolgend anhand einer bevorzugten Ausführungsform unter Bezugnahme auf die Zeichnung beschrieben. In der Zeichnung zeigen:
- Fig. 1: eine perspektivische Ansicht einer Schwenkvorrichtung mit einer Getriebeanordnung gemäß einer Ausführungsform der Erfindung,
- Fig. 2: eine perspektivische Ansicht der Getriebeanordnung,
- Fig. 3: eine Frontansicht der Getriebeanordnung,
- Fig. 4: eine Schnittansicht der Getriebeanordnung gemäß der Schnittlinie A-A aus Fig. 3,
- Fig. 5: eine teilweise freigeschnittene Ansicht der Getriebeanordnung und
- Fig. 6: eine teilweise Explosionsansicht der Getriebeanordnung.

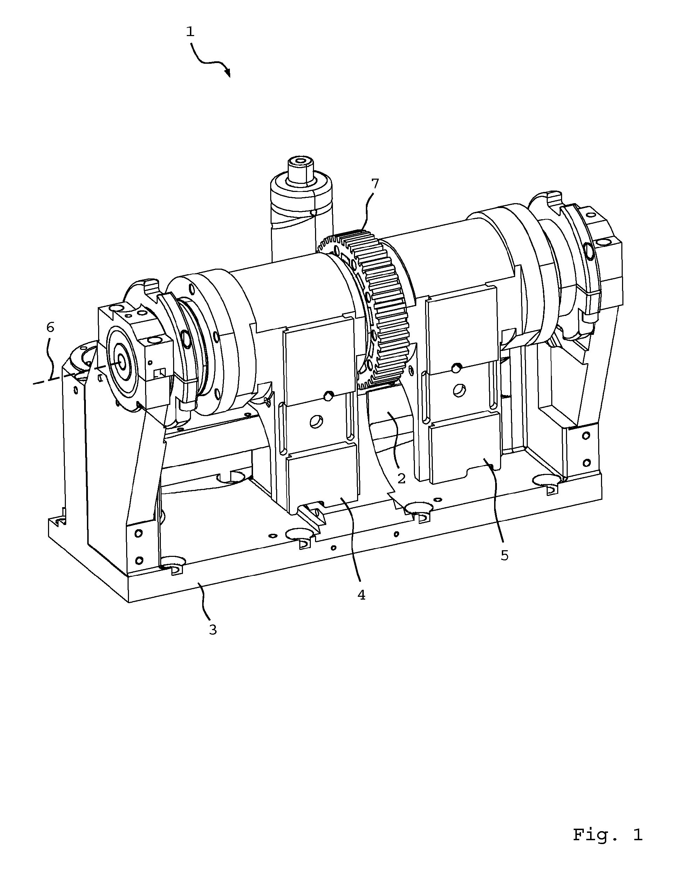

Aus Fig. 1 ist eine perspektivische Ansicht einer Schwenkvorrichtung 1 mit einer Getriebeanordnung 2 gemäß einer Ausführungsform der Erfindung ersichtlich. Die Schwenkvorrichtung 1 umfast eine Halterung 3, an der zwei Schwenkarme 4 und 5 um eine Schwenkachse 6 schwenkbar gelagert sind. Ferner ist ein als Stirnrad ausgebildetes Zahnrad 7 um die Schwenkachse 6 drehbar an der Halterung 3 gelagert und drehfest mit den Schwenkarmen 4 und 5 verbunden. Das Zahnrad 7 kann durch die Getriebeanordnung 2 angetrieben und somit um die Schwenkachse 6 gedreht werden, sodass auch die Schwenkarme 4 und 5 um die Schwenkachse 6 schwenken.

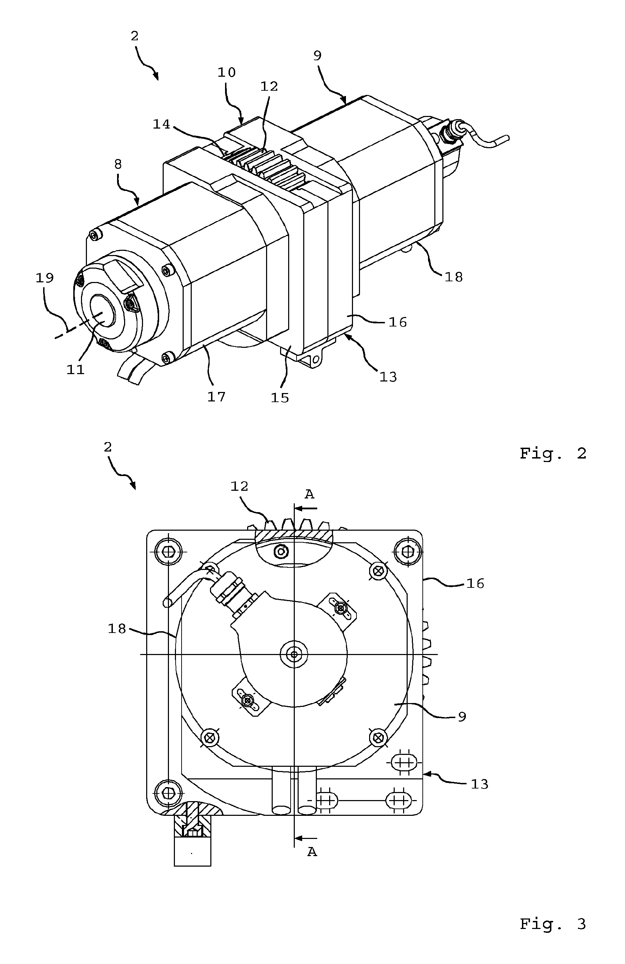

Aus Fig. 2 ist eine perspektivische Ansicht der Getriebeanordnung 2 ersichtlich, die zwei Elektromotoren 8 und 9 und ein zwischen diesen Motoren angeordnetes Getriebe 10 umfasst. Die Elektromotoren 8, 9 weisen eine gemeinsame Motorwelle 11 auf, mittels welcher das Getriebe 10 angetrieben wird. Abtriebseitig weist das Getriebe 10 einen mit einer Außenverzahnung versehenen Zahnkranz 12 auf, der im eingebauten Zustand gemäß Fig. 1 mit dem Zahnrad 7 kämmt. Das Getriebe 10 umfasst ein Getriebegehäuse 13, welches mit einer Öffnung 14 versehen ist, durch welche ein Teil des Zahnkranzes 12 aus dem Getriebegehäuse 13 herausragt. Das Getriebegehäuse 13 ist aus zwei Getriebegehäuseteilen 15 und 16 zusammengesetzt, die identisch oder zumindest annähernd identisch ausgebildet sind. Ferner weisen die Motoren 8 und 9 jeweils ein Motorgehäuse 17 bzw. 18 auf, wobei das Getriebegehäuseteil 15 einen Teil des Motorgehäuses 17 und das Getriebegehäuseteil 16 einen Teil des Motorgehäuses 18 bildet. Die Motorwelle 11 ist mittels der Motoren 8 und 9 um eine Wellenachse 19 drehbar.

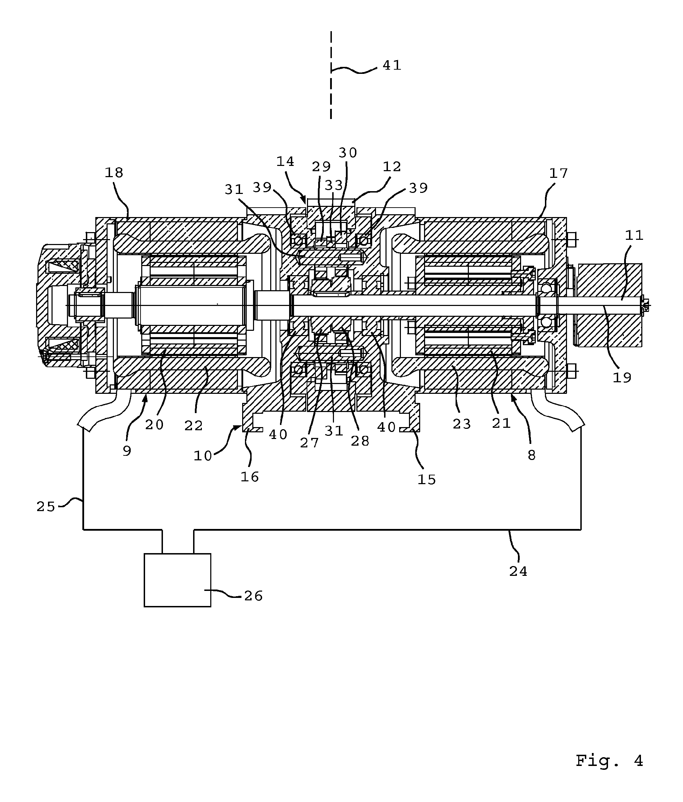

Eine Frontansicht der Getriebeanordnung 2 ist aus Fig. 3 ersichtlich. Ferner zeigt Fig. 4 eine Schnittansicht der Getriebeanordnung 2 entlang der aus Fig. 3 ersichtlichen Schnittlinie A-A. Jeder der Motoren 9 und 8 weist einen Läufer 20 bzw. 21 und einen Stator 22 bzw. 23 auf. Die Läufer 20 und 21 sitzen dabei drehfest auf der Motorwelle 11, wohingegen der Stator 22 am Motorgehäuse 18 und der Stator 23 am Motorgehäuse 17 befestigt ist. Ferner sind die Motoren 8 und 9 über elektrische Leitungen 24 bzw. 25 mit einer elektrischen Steuereinrichtung 26 verbunden, mittels welcher die Motoren 8 und 9 gesteuert und/oder geregelt werden können.

Die Motorwelle 11 bildet gleichzeitig die Antriebswelle des Getriebes 10, wobei zwei Exzenter 27 und 28 auf der Antriebswelle 11 sitzen und drehfest mit dieser verbunden sind. Die Exzenter 27 und 28 sind gegeneinander um die Wellenachse 19 verdreht und insbesondere identisch aufgebaut. Bevorzugt sind die Exzenter um 180° zueinander um die Wellenachse 19 verdreht. Der Exzenter 27 sitzt drehbar in einer Kurvenscheibe 29, und der Exzenter 28 sitzt drehbar in einer Kurvenscheibe 30. Ferner sind Mitnehmer 31 in beiden Getriebegehäuseteilen 15 und 16 gelagert und erstrecken sich durch die Kurvenscheiben 29 und 30 hindurch. Der Zahnkranz 12 ist mittels Wälzlager 39 drehbar an jedem der Getriebegehäuseteile 15, 16 gelagert. Auch ist die Antriebswelle 11 mittels Wälzlager 40 drehbar an jedem der Getriebegehäuseteile 15, 16 gelagert. Ferner ist in Fig. 4 eine senkrecht zur Wellenachse 19 ausgerichtete Ebene 41 schematisch angedeutet, zu welcher der Zahnkranz 12 spiegelsymmetrisch aufgebaut ist.

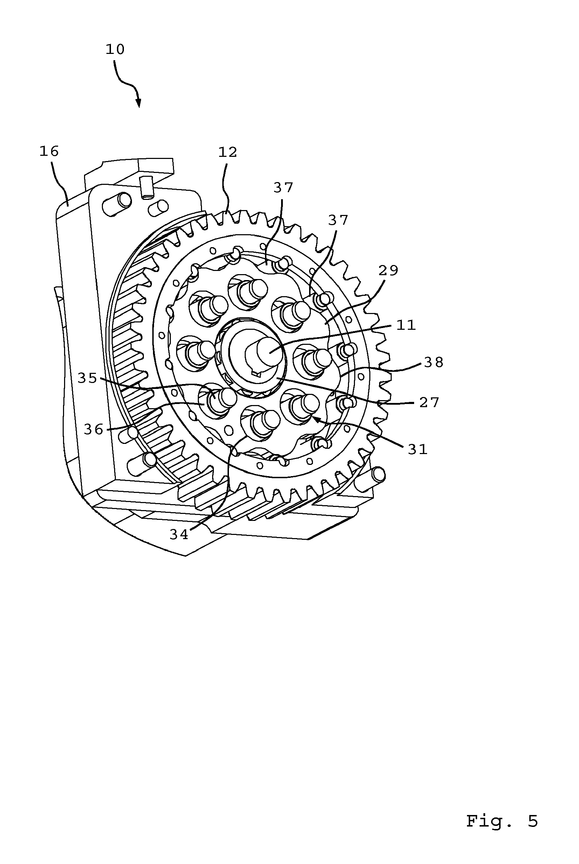

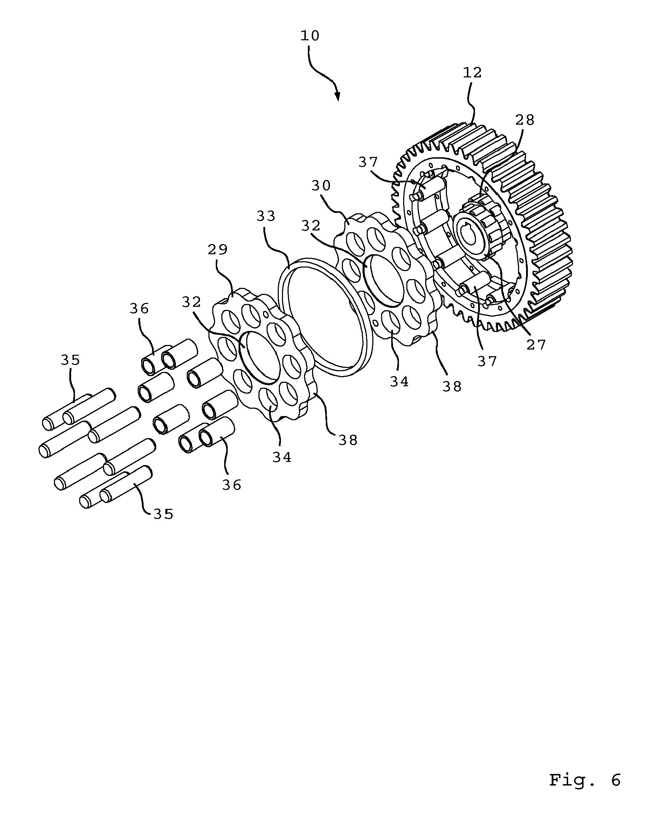

Aus Fig. 5 ist eine Ansicht des Getriebes 10 bei abgenommenen Getriebedeckel 15 ersichtlich, wohingegen Fig. 6 eine teilweise Explosionsansicht des Getriebes 10 ohne Getriebegehäuse 13 und ohne Antriebswelle 11 zeigt. Die Kurvenscheiben 29 und 30 weisen jeweils eine durchgehende, zentrale Ausnehmung 32 auf, in denen die Exzenter 27 bzw. 28 sitzen. Ferner ist zwischen den beiden Kurvenscheiben 29 und 30 ein Ring 33 als Abstandshalter angeordnet. In jeder Kurvenscheibe 29, 30 sind rings der Ausnehmung 32 durchgehende Löcher 34 vorgesehen, durch welche sich die Mitnehmer 31 hindurch erstrecken. Die Mitnehmer 31 weisen jeweils einen Bolzen 35 und eine Hülse 36 auf, die um ihre Längsachse drehbar auf dem Bolzen 35 sitzt. Wie aus Fig. 4 ersichtlich, sind die Bolzen 35 in dem Getriebegehäuseteil 15 mittels Presspassungen befestigt. Am Innenumfang des Zahnkranzes 12 sind rings der Antriebswelle 11 Bolzen 37 um ihre Längsachse drehbar gelagert, die mit einer Wellenkontur 38 am Außenumfang jeder Kurvenscheibe 29, 30 in Eingriff gebracht sind oder werden können.

Wird die Antriebswelle 11 mittels der Motoren 8, 9 um die Wellenachse 19 gedreht, so drehen sich auch die Exzenter 27 und 28 in den Kurvenscheiben 29 bzw. 30. Hierdurch werden die Kurvenscheiben 29, 30 auf einer Kreisbahn um die Wellenachse 19 bewegt, wobei die Mitnehmer 31 aber eine Eigenrotation der Kurvenscheiben 29 und 30 um ihre jeweilige Mittelachse verhindern. Durch das Ineinandergreifen der Wellenkonturen 38 und der Bolzen 37 wird eine Drehbewegung auf den Zahnkranz 12 übertragen, der sich folglich um die Wellenachse 19 dreht. Da der Zahnkranz 12 im montierten Zustand der Getriebeanordnung 2 mit dem Zahnrad 7 kämmt, wird auch das Zahnrad 7 um die Schwenkachse 6 gedreht, sodass die Schwenkarme 4 und 5 um die Schwenkachse 6 schwenken.

### Bezugszeichenliste

- 1: Schwenkvorrichtung
- 2: Getriebeanordnung
- 3: Halterung
- 4: Schwenkarm
- 5: Schwenkarm
- 6: Schwenkachse
- 7: Zahnrad
- 8: Motor
- 9: Motor
- 10: Getriebe
- 11: Motorwelle / Antriebswelle
- 12: Zahnkranz
- 13: Getriebegehäuse
- 14: Öffnung
- 15: Getriebegehäuseteil
- 16: Getriebegehäuseteil
- 17: Motorgehäuse
- 18: Motorgehäuse
- 19: Wellenachse
- 20: Läufer
- 21: Läufer
- 22: Stator
- 23: Stator
- 24: elektrische Leitungen
- 25: elektrische Leitungen
- 26: Steuereinrichtung
- 27: Exzenter
- 28: Exzenter
- 29: Kurvenscheibe
- 30: Kurvenscheibe
- 31: Mitnehmer
- 32: Ausnehmung
- 33: Ring
- 34: Loch
- 35: Bolzen
- 36: Hülse
- 37: Bolzen an Zahnkranz
- 38: Wellenkontur
- 39: Wälzlager
- 40: Wälzlager
- 41: Ebene

## Patentansprüche

1. Getriebeanordnung mit einem Getriebegehäuse (13), einer um eine Wellenachse (19) drehbaren Antriebswelle (11), wenigstens zwei Kurvenscheiben (29, 30), wenigstens zwei mit der Antriebswelle (11) gekoppelten Exzentern (27, 28), die jeweils um die Wellenachse (19) oder um eine dazu parallele Achse drehbar in einer der Kurvenscheiben (29, 30) gelagert sind, einem oder mehreren Mitnehmern (31), mittels welchen die Kurvenscheiben (29, 30) an dem Getriebegehäuse (13) geführt sind, einem um die Wellenachse (19) drehbaren Zahnkranz (12), der mit den Kurvenscheiben (29, 30) in Eingriff steht,
**dadurch gekennzeichnet, dass**
der Zahnkranz (12) die Kurvenscheiben (29, 30) umringt und in Richtung der Wellenachse (19) zwischen zwei miteinander verbundenen Teilen (15, 16) des Getriebegehäuses (13) angeordnet ist, an denen der Zahnkranz (12) um die Wellenachse (19) drehbar gelagert ist.

2. Getriebeanordnung nach Anspruch 1,
**dadurch gekennzeichnet, dass**
der Zahnkranz (12) an jedem der Getriebegehäuseteile (15, 16) um die Wellenachse (19) drehbar gelagert ist.

3. Getriebeanordnung nach Anspruch 1 oder 2,
**dadurch gekennzeichnet, dass**
der oder die Mitnehmer (31) in den Kurvenscheiben (29, 30) vorgesehene Löcher (34) durchgreifen und am Getriebegehäuse (13) befestigt sind.

4. Getriebeanordnung nach einem der vorangehenden Ansprüche,
**dadurch gekennzeichnet, dass**
in Richtung der Wellenachse (19) zwischen den beiden Getriebegehäuseteilen (15, 16) im Bereich der Kurvenscheiben (29, 30) eine Öffnung (14) für den Zahnkranz (12) vorgesehen ist.

5. Getriebeanordnung nach Anspruch 4,
**dadurch gekennzeichnet, dass**
der Zahnkranz (12) in einer zur Wellenachse (19) radialen Richtung durch die Öffnung (14) hindurch aus dem Getriebegehäuse (13) herausragt.

6. Getriebeanordnung nach einem der vorangehenden Ansprüche,
**dadurch gekennzeichnet, dass**
der Zahnkranz (12) zu einer senkrecht zur Wellenachse (19) verlaufenden Ebene spiegelsymmetrisch ist.

7. Getriebeanordnung nach einem der vorangehenden Ansprüche,
**dadurch gekennzeichnet, dass**
am Innenumfang des Zahnkranzes (12) Bolzen (37) drehbar gelagert sind, die mit jeder der Kurvenscheiben (29, 30) in Eingriff stehen oder gebracht werden können.

8. Getriebeanordnung nach einem der vorangehenden Ansprüche,
**dadurch gekennzeichnet, dass**
die beiden Getriebegehäuseteile (15, 16) identisch oder im Wesentlichen identisch ausgebildet sind.

9. Getriebeanordnung nach einem der vorangehenden Ansprüche,
**gekennzeichnet durch**
einen Antriebsmotor (8) mit einem Motorgehäuse (17) und einer Motorwelle, welche die Antriebswelle (11) bildet, wobei der Antriebsmotor (8) an einem der Getriebegehäuseteile (15) befestigt ist, welches einen Teil des Motorgehäuses (17) bildet.

10. Getriebeanordnung nach einem der Ansprüche 1 bis 8,
**gekennzeichnet durch**
zwei Antriebsmotoren (8, 9) mit einer gemeinsamen Motorwelle, welche die Antriebswelle (11) bildet, wobei der Zahnkranz (12) und die Kurvenscheiben (29, 30) zwischen den Antriebsmotoren (8, 9) angeordnet sind und jeder der Antriebsmotoren (8, 9) an einem der Getriebegehäuseteile (15, 16) befestigt ist.

11. Getriebeanordnung nach Anspruch 10,
**dadurch gekennzeichnet, dass**
die Antriebsmotoren (8, 9) jeweils ein Motorgehäuse (17, 18) aufweisen und die Getriebegehäuseteile (15, 16) jeweils eines oder einen Teil der Motorgehäuse (17, 18) bilden.

12. Getriebeanordnung nach einem der vorangehenden Ansprüche,
**gekennzeichnet durch**
ein mit dem Zahnkranz (12) kämmendes Zahnrad (7), welches an einer Halterung (3) drehbar gelagert ist, relativ zu welcher das Getriebegehäuse (13) starr festgelegt ist.

13. Getriebeanordnung nach Anspruch 12,
**gekennzeichnet durch**
wenigstens einen an der Halterung (3) schwenkbar gelagerten Schwenkarm (4), der drehfest mit dem Zahnrad (7) gekoppelt ist.

14. Getriebeanordnung nach einem der vorangehenden Ansprüche,
**dadurch gekennzeichnet, dass**
die Kurvenscheiben (29, 30), die Exzenter (27, 28), der oder die Mitnehmer (31) und der Zahnkranz (12) in dem Getriebegehäuse (13) angeordnet sind und die Antriebswelle (11) in dem Getriebegehäuse (13) verläuft.
